# EUROPÄISCHE PATENTSCHRIFT

(11) **EP 3 116 747 B1**
(45) Veröffentlichungstag und Bekanntmachung des Hinweises auf die Patenterteilung: **04.04.2018**
(21) Anmeldenummer: 15714429.6
(22) Anmeldetag: 10.03.2015
(51) Int. Cl.: B60N 3/04, F16B 1/00

(54) **VERSCHLUSSVORRICHTUNG MIT ZUSTANDSANZEIGE**
CLOSURE DEVICE WITH INDICATOR
DISPOSITIF DE FERMETURE AVEC INDICATEUR

(30) Priorität: 10.03.2014 DE 102014103181
(43) Veröffentlichungstag der Anmeldung: 18.01.2017
(73) Patentinhaber: Fidlock GmbH, 30175 Hannover (DE)
(72) Erfinder: FIEDLER, Joachim, 30175 Hannover (DE)
(74) Vertreter: Maikowski & Ninnemann Patentanwälte Partnerschaft mbB
(86) Internationale Anmeldenummer: PCT/EP2015/054967
(87) Internationale Veröffentlichungsnummer: WO 2015/135941

(56) Entgegenhaltungen:
- WO-A1-2011/095515
- WO-A1-2012/095823

## Beschreibung

Die Erfindung betrifft eine Verschlussvorrichtung zum Verbinden zweier Teile miteinander nach dem Oberbegriff des Anspruchs 1.

Eine derartige Verschlussvorrichtung (siehe z.B. die US 2004/0037636 A) zum Verbinden zweier Teile miteinander umfasst ein erstes Verschlussteil und ein in eine Ansetzrichtung an das erste Verschlussteil ansetzbares, zweites Verschlussteil, das ein Gehäuse und ein entlang einer von der Ansetzrichtung unterschiedlichen Verstellrichtung bewegbar an dem Gehäuse angeordnetes Verbindungselement aufweist. Das Verbindungselement ist zum Schließen der Verschlussvorrichtung in die Ansetzrichtung an das erste Verschlussteil ansetzbar und wird beim Ansetzen aus einer ersten Stellung in die Verstellrichtung in eine zweite Stellung relativ zum Gehäuse bewegt. In einer Schließstellung der Verschlussvorrichtung befindet sich das Verbindungselement in der zweiten Stellung und ist derart mit dem ersten Verschlussteil verbunden, dass das zweite Verschlussteil an dem ersten Verschlussteil gehalten ist.
Das Verbindungselement des zweiten Verschlussteils ist in Richtung der ersten Stellung gegenüber dem Gehäuse vorgespannt. Das Verbindungselement befindet sich somit, bei geöffneter Verschlussvorrichtung (also wenn die Verschlussteile voneinander getrennt sind), in der ersten Stellung, in die das Verbindungselement nach dem Öffnen der Verschlussvorrichtung selbsttätig aufgrund der Vorspannung bewegt wird.
Zum (erneuten) Schließen der Verschlussvorrichtung kann das zweite Verschlussteil an das erste Verschlussteil angesetzt werden, wodurch das Verbindungselement des zweiten Verschlussteils in die Verstellrichtung relativ zum Gehäuse bewegt wird und dadurch in seine zweite Stellung gelangt, in der eine Verbindung zwischen den Verschlussteilen hergestellt ist und die Verschlussvorrichtung somit geschlossen ist.

Verschlussvorrichtungen dieser Art können generell zum Verbinden zweier Teile miteinander eingesetzt werden. Solche Verschlussvorrichtungen können hierbei insbesondere eingesetzt werden, um Teile sicher und zuverlässig miteinander zu verbinden. Hierbei kann ein Bedürfnis danach bestehen, dass ein Nutzer auch in einfacher Weise erkennen kann, dass die Verschlussvorrichtung vollständig und korrekt geschlossen worden ist.

Dies ist insbesondere dort von Bedeutung, wo ein gegebenenfalls unvollständig erfolgtes Schließen der Verschlussvorrichtung zu einer Gefährdung der Sicherheit eines Nutzers führen könnte. Beispielsweise bei einer Fußmatte in einem Fahrzeug ist darauf zu achten, dass ein Verschluss zum Verbinden der Fußmatte mit einem Fahrzeugboden beim Ansetzen der Fußmatte an den Fahrzeugboden vollständig geschlossen wird, weil ansonsten - bei unvollständig geschlossener Verschlussvorrichtung - es zu einer Lageänderung der Fußmatte im Fahrzeug kommen könnte, was insbesondere am Fahrersitz mit davor gelegenen Pedalen ein Sicherheitsrisiko darstellen kann.

Aus der WO 2011/095515 A1 ist eine Verschlussvorrichtung zum Verbinden einer Fußmatte mit einem Fahrzeugboden bekannt, die eine Anzeigeeinrichtung mit einem bewegbar an einem Gehäuseteil angeordneten Magneten aufweist. Der Magnet befindet sich bei geöffneter Verschlussvorrichtung in einer ersten Stellung und wird beim Ansetzen des Gehäuseteils an ein Steckerteil aufgrund Wechselwirkung mit einem Magneten des Steckerteils in einer andere, zweite Stellung überführt. Durch Lageänderung des Magneten wird angezeigt, dass die Verschlussvorrichtung in ihre geschlossene Stellung gelangt ist.

Eine Anzeigeeinrichtung, wie sie aus der WO 2011/095515 A1 bekannt ist, ist geeignet für Verschlussvorrichtungen, die Magnetelemente zum Unterstützen des Schließens der Verschlussvorrichtung aufweisen. So sind bei der Verschlussvorrichtung der WO 2011/095515 A1 an den Verschlussteilen Magnete angeordnet, die sich beim Ansetzen der Verschlussteile aneinander magnetisch anziehend gegenüberstehen.

Aufgabe der vorliegenden Erfindung ist es, eine Verschlussvorrichtung bereitzustellen, die sicher und zuverlässig anzeigen kann, dass die Verschlussvorrichtung ihre geschlossene Stellung erreicht hat und hierbei auch rein mechanisch, also ohne Magnetelemente, ausgebildet sein kann.

Diese Aufgabe wird durch einen Gegenstand mit den Merkmalen des Anspruchs 1 gelöst.

Demnach ist zusätzlich eine an dem zweiten Verschlussteil angeordnete Anzeigeeinrichtung vorgesehen, die durch eine Bewegung des Verbindungselements relativ zum Gehäuse verstellbar ist, sich in der ersten Stellung des Verbindungselements in einer ersten Anzeigestellung und in der zweiten Stellung des Verbindungselements in einer zweiten Anzeigestellung befindet.

Die vorliegende Erfindung geht von dem Gedanken aus, eine Anzeigeeinrichtung vorzusehen, die zwischen unterschiedlichen Anzeigestellungen verstellbar ist und dadurch anzeigt, in welcher Stellung sich die Verschlussvorrichtung gerade befindet. Die Anzeigeeinrichtung wird hierbei durch Bewegen des Verbindungselements des zweiten Verschlussteils verstellt und ist somit mit dem Verbindungselement und dessen Stellung gekoppelt.

Weil das Verbindungselement beim Schließen der Verschlussvorrichtung mechanisch aufgrund des Ansetzens des zweiten Verschlussteils an das erste Verschlussteil in die Verstellrichtung bewegt wird, kann aus der Stellung des Verbindungselements unmittelbar abgeleitet werden, ob sich die Verschlussvorrichtung in ihrer geöffneten Stellung oder ihrer Schließstellung befindet. Das Verbindungselement befindet sich bei geöffneter Verschlussvorrichtung, also bei voneinander getrennten Verschlussteilen, in seiner ersten Stellung, weil das Verbindungselement beispielsweise über eine elastische Feder oder auf magnetische Weise in die erste Stellung vorgespannt ist. Beim Ansetzen der Verschlussteile aneinander wird das Verbindungselement in die zweite Stellung überführt, wodurch auch die Anzeigeeinrichtung von ihrer ersten Anzeigestellung in die zweite Anzeigestellung überführt wird, so dass unmittelbar angezeigt wird, dass die Verschlussvorrichtung geschlossen worden ist.

In diesem Zusammenhang sei angemerkt, dass grundsätzlich auch möglich ist, dass erste Verschlussteil an das zweite Verschlussteil anzusetzen. Entscheidend ist nur, dass die Verschlussteile zum Schließen der Verschlussvorrichtung aneinander angesetzt werden.

Grundsätzlich können auch mehrere erste Stellungen und mehrere zweite Stellungen vorhanden sein. In den ersten Stellungen ist die Verschlussvorrichtung jeweils geöffnet. In den zweiten Stellungen ist die Verschlussvorrichtung geschlossen, wobei das Verbindungselement aus einer zweiten Stellung immer in eine erste Stellung vorgespannt ist.

Aus der Anzeigestellung, die die Anzeigeeinrichtung gerade einnimmt, kann ein Nutzer unmittelbar erkennen, in welcher Stellung sich die Verschlussvorrichtung befindet. Insbesondere gelangt die Anzeigeeinrichtung nur dann in die zweite Anzeigestellung, wenn auch das Verbindungselement in seine zweite Stellung überführt worden ist und die Verschlussvorrichtung somit geschlossen worden ist. Es ist somit gewährleistet, dass die Verschlussvorrichtung vollständig geschlossen ist, wenn die Anzeigeeinrichtung sich in ihrer der geschlossenen Stellung zugeordneten, zweiten Anzeigestellung befindet.

Das Verbindungselement ist beispielsweise mit einem Betätigungselement verbunden derart, dass über das Betätigungselement das Verbindungselement insbesondere zum Öffnen der Verschlussvorrichtung relativ zum Gehäuse verstellt werden kann. Bei Verstellen des Betätigungselements wird auch die Anzeigeeinrichtung verstellt. Wird durch Betätigen des Betätigungselements beispielsweise die Verschlussvorrichtung geöffnet, indem das Verbindungselement aus seiner zweiten Stellung in die erste Stellung überführt wird, so ändert sich auch die Anzeigestellung der Anzeigeeinrichtung von der zweiten Anzeigestellung in die erste Anzeigestellung, so dass angezeigt wird, dass die Verschlussvorrichtung geöffnet worden ist.

Die Anzeigeeinrichtung kann beispielsweise mindestens zwei Anzeigefelder aufweisen, von denen in der ersten Stellung des Verbindungselements ein erstes und in der zweiten Stellung des Verbindungselements ein zweites sichtbar ist. Die Anzeigefelder der Anzeigeeinrichtung tragen vorzugsweise unterschiedliche Markierungen, beispielsweise unterschiedliche Farbkennzeichnungen oder Beschriftungen, so dass anhand der Anzeigefelder unmittelbar erkannt werden kann, in welcher Stellung sich die Verschlussvorrichtung befindet. Abhängig von der Anzeigestellung, in der sich die Anzeigeeinrichtung befindet, wird eines der Anzeigefelder angezeigt, wobei bei Änderung der Anzeigestellung auch das angezeigte Anzeigefeld wechselt.

Die zwei Anzeigefelder können beispielsweise an dem Gehäuse angeordnet sein und selektiv von dem zu dem Gehäuse verstellbaren Betätigungselement verdeckt werden. Beispielsweise kann das Betätigungselement eine Aussparung aufweisen, die in Deckung mit einem Anzeigefeld gebracht werden kann, so dass über die Aussparung genau ein Anzeigefeld sichtbar ist. In der ersten Stellung des Verbindungselements ist die Aussparung des Betätigungselements hierbei in Deckung mit dem ersten Anzeigefeld, so dass über die Aussparung das erste Anzeigefeld die Anzeigeeinrichtung sichtbar ist. Wird das Verbindungselement beim Schließen der Verschlussvorrichtung von seiner ersten Stellung in die zweite Stellung überführt, so wird auch das Betätigungselement bewegt und dadurch die Aussparung in Deckung mit dem zweiten Anzeigefeld gebracht, so dass das zweite Anzeigefeld sichtbar wird und dadurch angezeigt ist, dass die Verschlussvorrichtung in ihre geschlossenen Stellung überführt worden ist.

In der Schließstellung der Verschlussvorrichtung ist eine Verbindung zwischen den Verschlussteilen hergestellt. Die Verbindung ist hierbei derart, dass das zweite Verschlussteil entgegen der Ansetzrichtung und/oder quer zur Ansetzrichtung an dem ersten Verschlussteil gehalten ist.

Beispielsweise bei einer Fußmatte ist erforderlich, dass die Verschlussvorrichtung insbesondere quer zur Ansetzrichtung in der Erstreckungsebene der Fußmatte wirkende Kräfte aufnimmt, um eine Querverschiebung der Fußmatte zu verhindern. Die Verschlussvorrichtung muss damit insbesondere ausgelegt sein, um auf Scherung wirkende Querkräfte aufzunehmen und abzuleiten.

Zusätzlich kann aber auch vorgesehen sein, dass die Verschlussvorrichtung einen sicheren, beispielsweise formschlüssigen Halt entgegen der Ansetzrichtung bereitstellt, so dass die Verschlussteile nicht ohne weiteres, jedenfalls nicht ohne Betätigung des Betätigungselements, entgegen der Ansetzrichtung voneinander gelöst werden können.

Das Verbindungselement ist bewegbar an dem Gehäuse des zweiten Verschlussteils angeordnet. Das Verbindungselement kann hierbei beispielsweise linear verschiebbar, um eine quer zur Ansetzrichtung gerichtete Kippachse verkippbar oder um eine längs entlang der Ansetzrichtung gerichtete Drehachse drehbar an dem Gehäuse gelagert sein, so dass das Verbindungselement linear oder rotatorisch zu dem Gehäuse bewegt werden kann. Beim Ansetzen der Verschlussteile aneinander wird das Verbindungselement linear verschoben (bei linear verschiebbarer Lagerung), verkippt (bei verkippbarer Lagerung) oder verdreht (bei drehbarere Lagerung), und es wird eine Verbindung der Verschlussteile miteinander hergestellt und die Verschlussvorrichtung somit geschlossen.

Das erste Verschlussteil weist vorzugsweise mindestens einen ersten Verbindungsabschnitt auf, der beim Ansetzen des Verbindungselements des zweiten Verschlussteils an das erste Verschlussteil mit mindestens einem zweiten Verbindungsabschnitt des Verbindungselements in Anlage gelangt und dadurch das Verbindungselement in die Verstellrichtung relativ zum Gehäuse bewegt. Die Verbindungsabschnitte des ersten Verschlussteils einerseits und des Verbindungselements des anderen, zweiten Verschlussteils andererseits laufen beim Ansetzen der Verschlussteile aneinander aufeinander auf, wodurch eine Kraftwirkung auf das Verbindungselement zum Bewegen in die von der Ansetzrichtung unterschiedliche Verstellrichtung bewirkt wird.

Der mindestens eine erste Verbindungsabschnitt des ersten Verschlussteils und/oder der mindestens eine zweite Verbindungsabschnitt des Verbindungselements des zweiten Verschlussteils sind vorteilhafterweise zumindest abschnittsweise zur Ansetzrichtung geneigt und weisen somit eine Steigung relativ zur Ansetzrichtung auf. Die Verbindungsabschnitte geben die Bewegung des Verbindungselements beim Ansetzen der Verschlusszelle aneinander vor, indem sie eine Kraftwirkung in die Ansetzrichtung derart umsetzen, dass eine Kraftkomponente auch in die Verstellrichtung wirkt und dadurch das Verbindungselement in die Verstellrichtung verstellen.

Unterschiedliche Ausgestaltungen der Verbindungsabschnitte sind denkbar und möglich.

Beispielsweise können die Verbindungsabschnitte, bei linear verschiebbarer Lagerung des Verbindungselements an dem Gehäuse des zweiten Verschlussteils, als linear erstreckte, schräg zur Ansetzrichtung geneigte Führungsabschnitte nach Art von schiefen Ebenen ausgebildet sein. Beim Ansetzen der Verschlussteile aneinander laufen die Verbindungabschnitte aufeinander auf und bewirken, dass das Verbindungselement beispielsweise quer zur Ansetzrichtung an dem Gehäuse verstellt wird. Aufgrund der Neigung der Verbindungsabschnitte wirkt somit eine Kraftkomponente auf das Verbindungselement, die ein Verstellen des Verbindungselements in die Verstellrichtung bewirkt.

Bei verkippbarer Lagerung kann ein Verbindungsabschnitt schräg zur Ansetzrichtung geneigt sein, während der andere Verbindungsabschnitt beispielsweise als Zapfen ausgebildet sein kann, so dass durch Auflaufen des zapfenförmigen Verbindungsabschnitts auf den schräg geneigten Verbindungsabschnitt ein Verkippen des kippbar gelagerten Verbindungselements bewirkt werden kann.

Bei drehbarer Lagerung des Verbindungselements an dem Gehäuse des zweiten Verschlussteils können die Verbindungsabschnitte beispielsweise als Gewindegänge ausgebildet sein, die beim Ansetzen der Verschlussteile aneinander aufeinander auflaufen und dadurch ein Verdrehen des Verbindungselements relativ zum Gehäuse bewirken. Die Gewindegänge sind hierbei zur Ansetzrichtung geneigt, so dass beim Ansetzen der Verschlussteile aneinander eine Kraftkomponente - bedingt durch das Auflaufen der Gewindegänge aufeinander - um die Ansetzrichtung wirkt und dadurch das Verbindungselement beim Ansetzen der Verschlussteile aneinander relativ zum Gehäuse um die Ansetzrichtung verdreht wird.

Beim Ansetzen der Verschlussteile aneinander laufen die Verbindungsabschnitte aufeinander auf, wobei durch das Auflaufen eine Kraftkomponente in die Verstellrichtung bewirkt wird und dadurch das Verbindungselement verstellt wird. Die Verbindungsabschnitte sind hierbei derart geformt und zur Ansetzrichtung geneigt, dass keine Selbsthemmung besteht, also es beim Ansetzen der Verschlussteile entlang der Ansetzrichtung zu einer Kraftumleitung zum Bewegen des Verbindungselements in die Verstellrichtung kommt. Sind die Verbindungsabschnitte beispielsweise als Gewindegänge ausgebildet, so sind die Gewindegänge entsprechend derart steil geneigt, dass die Gewindegänge aufeinander auflaufen können und dadurch das Verbindungselement verdreht werden kann.

Denkbar und möglich ist hierbei, dass die Gewindegänge so geformt sind, dass beim Schließen keine Selbsthemmung besteht, hingegen beim Öffnen, also bei Belastung des zweiten Verschlussteils entgegen der Ansetzrichtung, eine Selbsthemmung besteht, so dass die Verschlussteile nicht ohne weiteres voneinander gelöst werden können, jedenfalls nicht, ohne das Betätigungselement zum Verstellen des Verbindungselements entgegen der Verstellrichtung zu betätigen. Beispielsweise können beim Öffnen der Verschlussvorrichtung die Verbindungsabschnitte mit anderen Seiten aneinander in Anlage gelangen, wobei an diesen Seiten die Verbindungsabschnitte eine andere Steigung zur Ansetzrichtung aufweisen können, so dass gegebenenfalls eine Selbsthemmung besteht.

Denkbar und möglich ist aber auch, dass auch beim Öffnen der Verschlussvorrichtung keine Selbsthemmung zwischen den Verbindungsabschnitte besteht. Dies hat zur Folge, dass durch Zug an dem zweiten Verschlussteil entgegen der Ansetzrichtung die Verschlussvorrichtung ohne weiteres, auch ohne Betätigung des Betätigungselements, geöffnet werden kann, indem die Verschlussteile einfach voneinander abgezogen werden. Bei Belastung des zweiten Verschlussteils entgegen der Ansetzrichtung wird das Verbindungselement durch Auflaufen der Verbindungsabschnitte aufeinander entgegen der Verstellrichtung bewegt und dadurch die Verschlussvorrichtung geöffnet, so dass die Verschlussteile voneinander getrennt werden können.

Denkbar und möglich ist in einer weiteren Variante, dass an den Verbindungsabschnitten jeweils mindestens ein Formschlussabschnitt angeordnet ist, die bei Belastung des zweiten Verschlussteils entgegen der Ansetzrichtung formschlüssig miteinander in Eingriff gelangen derart, dass ein Verdrehen des Verbindungselements relativ zum ersten Verschlussteil und damit auch relativ zum Gehäuse gesperrt ist. Die Formschlussabschnitte gelangen nur bei Belastung des zweiten Verschlussteils entgegen der Ansetzrichtung miteinander in Eingriff, so dass bei Belastung der Halt der Verschlusszeile aneinander verstärkt ist und insbesondere ein Öffnen der Verschlussvorrichtung unter Last ausgeschlossen ist. Ist die Verschlussvorrichtung nicht belastet, so sind die Formschlussabschnitte nicht miteinander in Eingriff, so dass durch Betätigen des Betätigungselements das Verbindungselement aus seiner zweiten Stellung entgegen der Verstellrichtung in die ersten Stellung überführt werden kann, um auf diese Weise die Verbindung zwischen den Verschlussteilen aufzuheben und die Verschlussvorrichtung zu öffnen.

Das Verbindungselement kann beispielsweise durch ein Federelement gegenüber dem Gehäuse vorgespannt sein. Das Federelement kann beispielsweise als Schraubfeder ausgestaltet sein und zwischen dem Betätigungselement und dem Gehäuse in Richtung der ersten Stellung des Verbindungselements wirken. Das Federelement ist hierbei so dimensioniert, dass das Verbindungselement nach Öffnen der Verschlussvorrichtung selbsttätig in seine erste Stellung überführt wird, so dass das Verbindungselement bei geöffneter Verschlussvorrichtung sich stets in seiner ersten Stellung befindet. Entsprechend nimmt dann auch die Anzeigeeinrichtung die erste Anzeigestellung ein und zeigt somit an, dass die Verschlussvorrichtung geöffnet ist.

Die Vorspannung des Verbindungselements in die erste Stellung kann alternativ beispielsweise magnetisch bewirkt werden.

Vorteilhafterweise ist der Kraftverlauf der Vorspannung hierbei derart, dass die Vorspannkraft in Richtung der zweiten Stellung abnimmt, die Vorspannkraft beim Schließen also schwächer wird.

Darunter, dass das Verbindungselement in Richtung der ersten Stellung vorgespannt ist, kann auch zu verstehen sein, dass das Verbindungselement nach Bringung in die erste Stellung dort vorgespannt gehalten wird, bei einer Verstellung aus der ersten Stellung heraus in die zweite Stellung gegebenenfalls aber keine Vorspannkraft (mehr) wirkt und somit keine Rückstellung in die erste Stellung erfolgt. Insbesondere kann beispielsweise in der zweiten Stellung gegebenenfalls keine Vorspannkraft in Richtung der ersten Stellung wirken. Erst nachdem eine Bewegung in Richtung der ersten Stellung begonnen hat oder die erste Stellung erreicht ist, beginnt eine Vorspannkraft zu wirken.

Die Verschlussvorrichtung kann grundsätzlich rein mechanisch, also ohne zusätzliche, das Ansetzen der Verschlussteile aneinander unterstützende Magnetelemente ausgestaltet sein.

Denkbar und möglich ist aber auch, an jedem Verschlussteil ein oder mehrere Magneteinrichtungen vorzusehen, also beispielsweise jeweils einen Magneten oder einerseits einen Magneten und andererseits einen magnetischen Anker, also ein aus einem ferromagnetischen Material bestehendes Bauelement. Die Magneteinrichtungen stehen sich beim Ansetzen der Verschlussteile magnetisch anziehend gegenüber und bewirken, dass das Ansetzen der Verschlussteile aneinander magnetisch unterstützt wird, wobei die Magnetelemente vorzugsweise so dimensioniert sind, dass das Schließen der Verschlussvorrichtung in für einen Nutzer komfortabler Weise weitestgehend selbsttätig erfolgen kann, wenn die Verschlussteile einander angenähert sind.

Sind Magneteinrichtungen vorgesehen, können diese auch ein Bewegen des Verbindungselements bei Ansetzen der Verschlussteile aneinander bewirken. Beispielsweise können Magnete so zueinander an dem ersten Verschlussteil und dem Verbindungselement angeordnet sein, dass beim Ansetzen der Verschlussteile aneinander auch eine magnetische Kraftkomponente in Richtung der Verstellrichtung erzeugt wird, aufgrund derer das Verbindungselement in die Verstellrichtung verstellt wird.

Beispielsweise können an dem ersten Verschlussteil und dem Verbindungselement jeweils Magneteinrichtungen mit mehreren quer zur Ansetzrichtung zueinander versetzten Polen vorgesehen sein, die eine magnetische Kraftkomponente quer zur Ansetzrichtung (bei linear verschiebbarer oder verkippbarer Lagerung des Verbindungselements) oder um die Ansetzrichtung (bei drehbarer Lagerung des Verbindungselements) bewirken.

Eine solche in die von der Ansetzrichtung unterschiedliche Verstellrichtung gerichtete magnetische Kraftkomponente kann grundsätzlich durch versetzte Anordnung oder durch geeignete Formgebung der magnetischen Elemente an dem ersten Verschlussteil und dem Verbindungselement bewirkt werden.

Eine Verschlussvorrichtung der hier beschriebenen Art kann beispielsweise bei einer Befestigungsanordnung wie einer Fußmatte zum Einsatz kommen. Das erste Verschlussteil ist hierbei an einem ersten Befestigungselement, beispielsweise feststehend an einem Fahrzeugboden, angeordnet, während das zweite Verschlussteil beispielsweise an der an dem Fahrzeugboden zu befestigenden Fußmatte angeordnet ist. Das erste Verschlussteil kann beispielsweise als feststehend an dem Fahrzeugboden angeordneter Zapfen ausgebildet sein. Das zweite Verschlussteil ist dann beispielsweise in die Fußmatte integriert, wobei das Gehäuse an der Fußmatte befestigt und das Verbindungselement relativ zu dem Gehäuse bewegbar ist.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Verschlussvorrichtung;
- Fig. 1B: eine andere Explosionsansicht der Verschlussvorrichtung;
- Fig. 2: eine Ansicht der Verschlussvorrichtung mit zwei Verschlussteilen, in getrennter Stellung;
- Fig. 3A: eine Draufsicht auf die Verschlussvorrichtung, vor dem Schließen der Verschlussvorrichtung;
- Fig. 3B: eine Schnittansicht entlang der Linie A-A gemäß Fig. 3A;
- Fig. 4A: eine Draufsicht auf die Verschlussvorrichtung, in geschlossener Stellung der Verschlussvorrichtung;
- Fig. 4B: eine Schnittansicht entlang der Linie A-A gemäß Fig. 4A;
- Fig. 5A: eine schematische Ansicht eines weiteren Ausführungsbeispiels einer Verschlussvorrichtung, in geöffneter Stellung;
- Fig. 5B: eine schematische Ansicht der Verschlussvorrichtung, in geschlossener Stellung;
- Fig. 6A: eine Draufsicht auf die Verschlussvorrichtung in der Stellung gemäß Fig. 5A;
- Fig. 6B: eine Draufsicht auf die Verschlussvorrichtung in der Stellung gemäß Fig. 5B;
- Fig. 7A: eine schematische Ansicht einer Verschlussvorrichtung mit einem kippbar gelagerten Verbindungselement, in geöffneter Stellung der Verschlussvorrichtung; und
- Fig. 7B: eine schematische Ansicht der Verschlussvorrichtung gemäß Fig. 7A, in geschlossener Stellung der Verschlussvorrichtung.

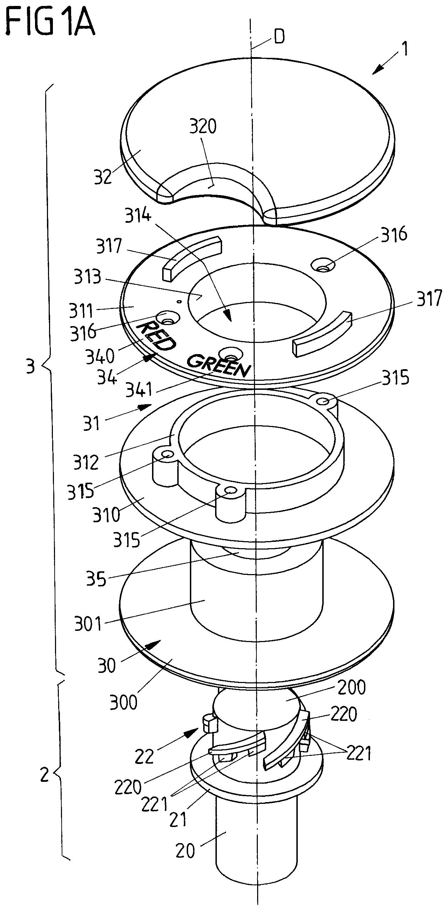

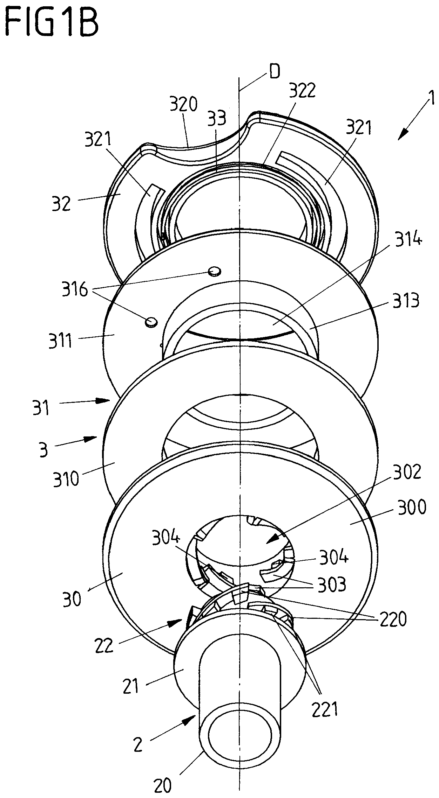

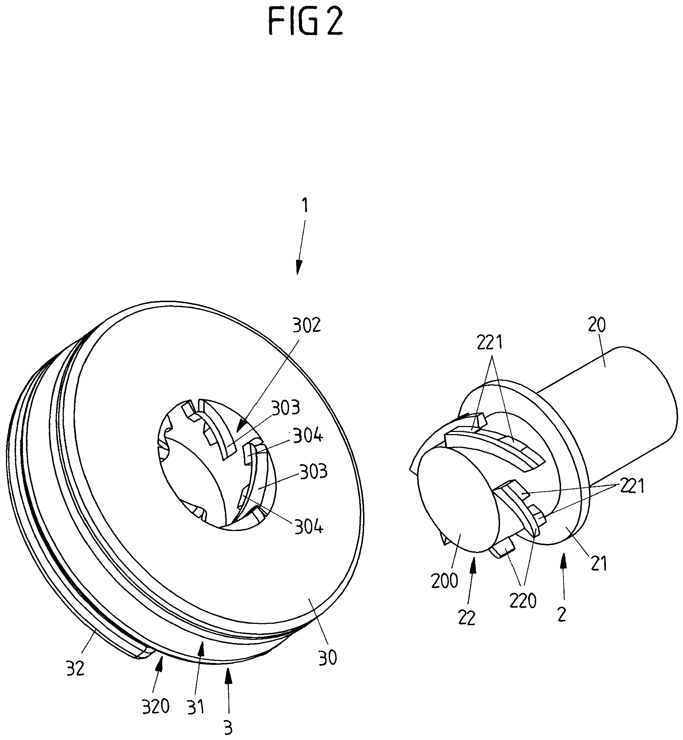

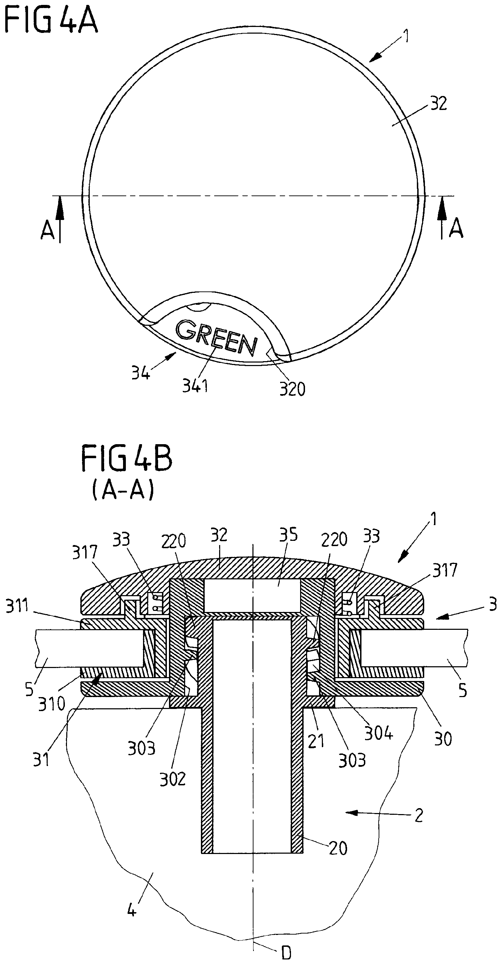

Fig. 1A, 1B bis 4A, 4B zeigen in unterschiedlichen Ansichten ein erstes Ausführungsbeispiel einer Verschlussvorrichtung 1, die zwei Verschlussteile 2, 3 aufweist. Die Verschlussteile 2, 3 können zum Schließen der Verschlussvorrichtung 1 entlang einer Ansetzrichtung X aneinander angesetzt werden und sind in einer Schließstellung (siehe Fig. 4A, 4B) miteinander verbunden.

Die Verschlussvorrichtung 1 weist ein erstes Verschlussteil 2 und ein zweites Verschlussteil 3 auf. Das erste Verschlussteil 2 umfasst einen Schaft 20, der einen Kragen 21 und an einem Ende 200 eine Verbindungseinrichtung 22 mit Verbindungsabschnitten 220 in Form von umfänglich um den Schaft 20 zueinander versetzten Gewindegängen trägt. Rückseitig an den Verbindungsabschnitten 220, also an einer hin zum Kragen 21 weisenden Seite, weisen die Verbindungsabschnitte 220 Formschlusselemente 221 in Form von vorspringenden Zähnen auf, deren Funktion nachfolgend noch erläutert werden soll.

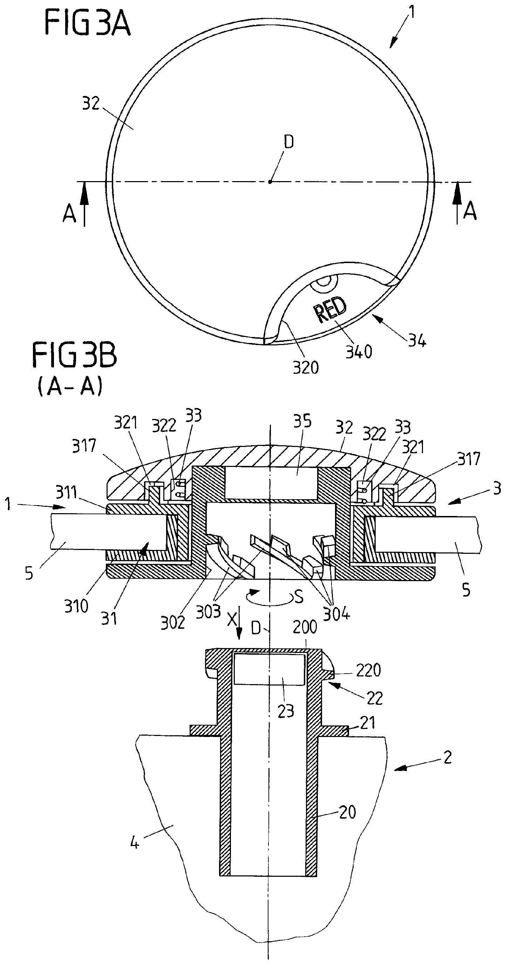

Das erste Verschlussteil 2 kann beispielsweise feststehend an einem Befestigungselement, beispielsweise einem Fahrzeugboden 4 (siehe Fig. 3B), angeordnet sein.

Das zweite Verschlussteil 3 weist ein Gehäuse 31 auf, das aus zwei Gehäuseteilen 310, 311 zusammengesetzt ist. Das erste Gehäuseteil 310 weist einen Bund 312 auf, in den das zweite Gehäuseteil 311 mit einem Bund 313 eingesetzt ist. Über Befestigungsstellen 315,316 sind die Gehäuseteile 310, 311 fest, beispielsweise über Schraubverbindungen, miteinander verbunden.

Zwischen den Gehäuseteilen 310, 311 des Gehäuses 31 ist ein Befestigungselement, beispielsweise eine Fußmatte 5 (siehe Fig. 3B), klemmend gehalten, so dass das Gehäuse 31 an dem Befestigungselement festgelegt ist.

Der Bund 313 des zweiten Gehäuseteils 311 umschließt eine Lageröffnung 314, in dem ein Verbindungselement 30 über einen Bund 301 um eine Drehachse D drehbar gelagert ist. Das Verbindungselement 30 weist einen Kragen 300 auf, der an dem ersten Gehäuseteil 310 anliegt. Von dem Kragen 300 erstreckt sich der Bund 301 durch die Öffnung 314 in dem Bund 313 des zweiten Gehäuseteils 311 hindurch und ist an seinem dem Kragen 300 abgewandten Ende mit einem Betätigungselement 32 drehfest verbunden (siehe z.B. Fig. 3B). Das Betätigungselement 32 und das Verbindungselement 30 bilden somit eine Einheit, die um die Drehachse D drehbar an dem Gehäuse 31 gelagert ist.

An der dem Betätigungselement 32 zugewandten Seite des zweiten Gehäuseteils 311 sind Anschläge 317 ausgebildet, die in Aufnahmeöffnungen 321 (siehe Fig. 1B) unterseitig am Betätigungselement 32 hinein ragen. Über die in die Aufnahmeöffnungen 321 hinein ragenden Anschläge 317 wird der Verdrehweg der aus dem Betätigungselement 32 und dem Verbindungselement 30 gebildeten Einheit relativ zu dem Gehäuse 31 begrenzt.

Das Betätigungselement 32 ist über ein Federelement 33 (siehe Fig. 3B), das in einer Aufnahmerille 322 unterseitig am Betätigungselement 32 einliegt, gegenüber dem Gehäuse 31 in Richtung einer ersten Stellung vorgespannt. In dieser ersten Stellung befindet sich die aus dem Verbindungselement 30 und dem Betätigungselement 32 gebildete Einheit, wenn die Verschlussvorrichtung 1 nicht geschlossen ist, wenn also die Verschlussteile 2, 3 nicht aneinander angesetzt sind.

Innerhalb des Bunds 301 an dem Verbindungselement 30 ist eine Öffnung 302 nach Art eines Sacklochs ausgebildet, an dessen innerer Mantelfläche Verbindungsabschnitte 303 in Form von umfänglich zueinander versetzten Gewindegängen ausgebildet sind. An einer nach innen hin weisenden Seite tragen diese Verbindungsabschnitte 303 Formschlusselemente 304 nach Art von vorspringenden Zähnen (analog wie die Verbindungsabschnitte 220 an dem Schaft 20 des ersten Verschlussteils 2).

Zum Schließen der Verschlussvorrichtung 1 kann das zweite Verschlussteil 3 mit dem daran angeordneten Befestigungselement 5 beispielsweise in Form einer Fußmatte an das feststehend an dem anderen Befestigungselement 4, beispielsweise einem Fahrzeugboden, befestigte erste Verschlussteil 2 angesetzt werden, indem die Öffnung 302 an dem Verbindungselement 30 auf das Ende 200 des Schafts 20 aufgesteckt wird.

Dies ist in Fig. 3B dargestellt. Das zweite Verschlussteil 3 wird hierbei in eine Ansetzrichtung X dem ersten Verschlussteil 2 angenähert, so dass die Verbindungsabschnitte 303 in der Öffnung 302 des Verbindungselements 30 auf die Verbindungsabschnitte 220 an dem Ende 200 des Schafts 20 des ersten Verschlussteils 2 auflaufen. Hierdurch wird das Verbindungselement 30 in eine Verstellrichtung S um die Ansetzrichtung X herum verdreht, so dass die Verbindungsabschnitte 220, 303 schraubend miteinander in Eingriff gelangen.

Die Steigung der Verbindungsabschnitte 220, 303 in Form der Gewindegänge an dem Schaft 20 bzw. an der Öffnung 302 ist so groß, dass keine Selbsthemmung besteht. Auf diese Weise können bei Ansetzen der Verschlussteile 2,3 entlang der Ansetzrichtung X aneinander die Verbindungsabschnitte 220, 303 aufeinander auflaufen und somit eine Verdrehung des Verbindungselements 30 um die Ansetzrichtung X herum bewirken.

In einer Schließstellung, dargestellt in Fig. 4B, hintergreifen die Verbindungsabschnitte 220 des ersten Verschlussteils 2 die Verbindungsabschnitte 303 am Verbindungselement 30 des zweiten Verschlussteils 3. Das erste Verschlussteil 2 steht somit schraubend mit dem Verbindungselement 30 des zweiten Verschlussteils 3 in Eingriff, so dass eine Verbindung zwischen den Verschlussteilen 2, 3 hergestellt ist.

In der Schließstellung stehen die Verbindungsabschnitte 220, 303 sich entlang der Ansetzrichtung X mit Abstand gegenüber, wenn die Verschlussvorrichtung 1 nicht belastet ist. Entsprechend sind die Formschlusselemente 220, 303 bei unbelasteter Verschlussvorrichtung 1 nicht miteinander in Eingriff. Wirkt jedoch eine Belastungskraft in eine Belastungsrichtung F entgegen der Ansetzrichtung X auf das zweite Verschlussteil 3, so gelangen die Formschlusselemente 221, 304 an den Verbindungsabschnitten 220, 303 formschlüssig miteinander in Eingriff, so dass eine Verdrehung des Verbindungselements 30 relativ zu dem ersten Verschlussteil 2 gesperrt ist. Der Gewindeeingriff zwischen dem ersten Verschlussteil 2 und dem Verbindungselement 30 ist damit verriegelt, so dass die Verschlussvorrichtung 1 unter Belastung nicht geöffnet werden kann.

An dem ersten Verschlussteil 2 und an dem Verbindungselement 30 des zweiten Verschlussteils 3 ist jeweils ein Magnetelement 23, 35 angeordnet, die magnetisch derart wechselwirken, dass das Ansetzen der Verschlussteile 2, 3 aneinander entlang der Ansetzrichtung X magnetisch unterstützt wird. Die Magnetelemente 23, 35 können jeweils als Magnet oder einerseits als Magnet und andererseits als magnetischer Anker, also als aus einem ferromagnetischen Material gefertigtes Bauteil, gebildet sein. Die Magnetelemente 23, 35 stehen sich bei Annäherung der Verschlussteile 2, 3 magnetisch anziehend gegenüber, so dass eine magnetische Anziehungskraft zwischen den Magnetelementen 23, 35 wirkt und dadurch das Verbindungselement 30 an das erste Verschlussteil 2 angezogen wird.

Die Magnetelemente 23, 35 sind in vorteilhafter Weise derart dimensioniert, dass bei Annäherung der Verschlussteile 2, 3 aneinander das Schließen der Verschlussvorrichtung 1 weitestgehend selbsttätig erfolgen kann. Insbesondere sind die Magnetelemente 23, 35 derart dimensioniert, dass die Verbindungsabschnitte 220, 303 unter Magnetwirkung selbsttätig aufeinander auflaufen und das Verbindungselement 30 beim Ansetzen an das erste Verschlussteil 2 entsprechend verdreht wird.

Aufgrund der Magnetwirkung der Magnetelemente 23, 35 werden die Verschlussteile 2, 3 bei unbelasteter Verschlussvorrichtung 1 in der Stellung gemäß Fig. 4B zueinander gehalten. In dieser Stellung sind die Formschlusselemente 221, 304 an den Verbindungsabschnitten 220, 303 entlang der Ansetzrichtung X voneinander beabstandet und nicht miteinander in Eingriff, so dass durch Betätigung des Betätigungselements 32 die Verschlussvorrichtung 1 geöffnet werden kann. Erst bei einer Belastung des zweiten Verschlussteils 3 in die Belastungsrichtung F, die der Ansetzrichtung X entgegengesetzt ist, gelangen die Formschlusselemente 221, 304 formschlüssig in Eingriff, so dass ein Verdrehen des Verbindungselements 30 relativ zum ersten Verschlussteil 2 gesperrt und damit ein Öffnen der Verschlussvorrichtung 1 nicht möglich ist.

Zum Öffnen kann das Betätigungselement 32 - bei unbelasteter Verschlussvorrichtung 1 - zusammen mit dem Verbindungselement 30 entgegen der Verstellrichtung S verdreht werden, so dass die Verbindungsabschnitte 220, 303 schraubend außer Eingriff gebracht und die Verschlussteile 2, 3 voneinander getrennt werden können. Dies ist nur bei unbelasteter Verschlussvorrichtung 1 möglich. Bei belasteter Verschlussvorrichtung 1 ist eine solche Drehbewegung durch Eingriff der Formschlusselemente 221, 304 ineinander gesperrt.

Das zweite Verschlussteil 3 weist eine Anzeigeeinrichtung 34 auf, die dazu dient, anzuzeigen, in welcher Stellung sich die Verschlussvorrichtung 1 befindet. Insbesondere dient die Anzeigeeinrichtung 34 dazu, anzuzeigen, ob die Verschlussvorrichtung 1 geöffnet ist oder sie in ihre Schließstellung überführt worden ist.

Die Anzeigeeinrichtung 34 weist zwei an dem zweiten Gehäuseteil 311 an einer dem Betätigungselement 32 zugewandten Seite angebrachte Anzeigefelder 340, 341 auf, die unterschiedliche Markierungen tragen. Diesen Anzeigefeldern 340, 341 ist eine Aussparung 320 an dem Betätigungselement 32 zugeordnet, wobei die Aussparung 320 abhängig von der Stellung des Betätigungselements 32 mit dem einen Anzeigefeld 340 oder dem anderen Anzeigefeld 341 in Deckung ist. Abhängig von der Stellung des Betätigungselements 32 ist somit das eine Anzeigefeld 340 oder das andere Anzeigefeld 341 von außen sichtbar.

In der ersten Stellung des Verbindungselements 30 ist die Aussparung 320 am Betätigungselement 32 mit dem Anzeigefeld 340 der Anzeigeeinrichtung 34 in Deckung, wie dies in Fig. 3A dargestellt ist. In dieser Stellung befindet sich das Verbindungselement 30 aufgrund der Vorspannung des Federelements 33, wenn die Verschlussvorrichtung 1 nicht geschlossen ist.

Bei geschlossener Verschlussvorrichtung 1 hingegen befindet sich die Aussparung 320 in Deckung mit dem anderen Anzeigefeld 341, wie dies in Fig. 4A dargestellt ist. In diese Stellung gelangt die aus dem Betätigungselement 32 und dem Verbindungselement 30 gebildete Einheit, wenn die Verschlussvorrichtung 1 geschlossen ist.

Bei einem Ansetzen einer Fußmatte 5 an einen Fahrzeugboden 4 kann auf diese Weise ohne weiteres erkannt werden, wenn die Verbindung der Fußmatte 5 mit dem Fahrzeugboden 4 hergestellt ist. Ist die Verbindung noch nicht (vollständig) hergestellt, so erkennt dies ein Nutzer ohne weiteres anhand des gerade sichtbaren Anzeigefeldes 340, 341.

Bei dem Ausführungsbeispiel gemäß Fig. 1A, 1B und 4A, 4B ist das Verbindungselement 30 relativ zu dem Gehäuse 31 um die Drehachse D verdrehbar. Entsprechend sind die Verbindungsabschnitte 220, 303 als Gewindegänge ausgestaltet, die beim Ansetzen der Verschlussteile 2,3 aufeinander auflaufen und auf diese Weise ein Verdrehen des Verbindungselements 30 bewirken.

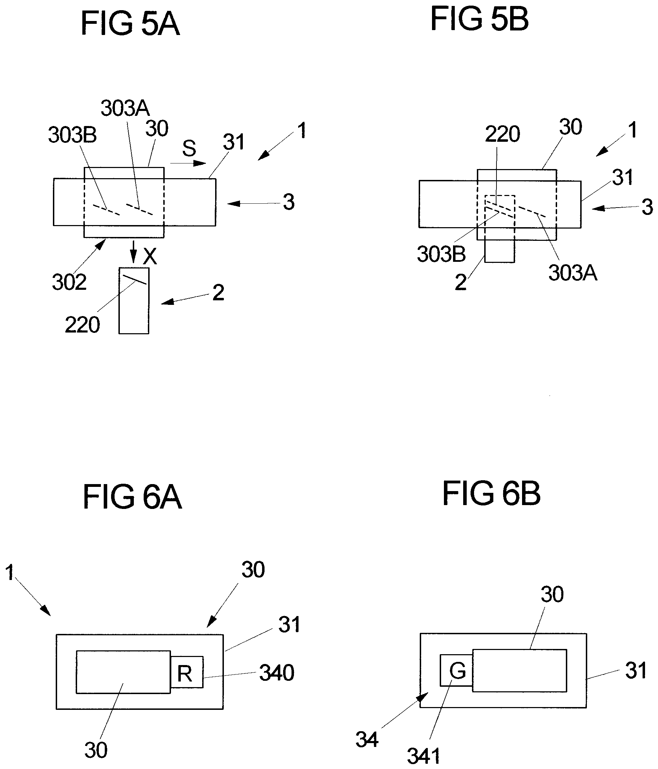

Das Verbindungselement 30 kann in einem anderen Ausführungsbeispiel, schematisch dargestellt in Fig. 5A, 5B und 6A, 6B, aber auch linear verschiebbar an dem Gehäuse 31 angeordnet sein, wobei in diesem Fall die Verbindungsabschnitte 220, 303A, 303B als geradlinig erstreckte, nach Art von schiefen Ebenen ausgebildete Längsführungsabschnitte geformt sind.

Beim Ansetzen des zweiten Verschlussteils 3 an das erste Verschlussteil 2 in die Ansetzrichtung X läuft der geradlinig erstreckte Verbindungsabschnitt 220 an dem ersten Verschlussteil 2 auf einen ersten Verbindungsabschnitt 303A an dem Verbindungselement 30 des zweiten Verschlussteils 3 auf. Auf diese Weise wird beim Ansetzen das Verbindungselement 30 in eine gradlinige Verstellrichtung S relativ zum Gehäuse 31 verstellt, wie dies aus dem Übergang von Fig. 5A zu Fig. 5B ersichtlich ist. In der Schließstellung hintergreift der Verbindungsabschnitt 220 des ersten Verschlussteils 2 einen zweiten Verbindungsabschnitt 303B am Verbindungselement 30, so dass eine Verbindung zwischen den Verschlussteilen 2, 3 hergestellt ist. Dies ist in Fig. 5B dargestellt.

Abhängig von der Stellung des Verbindungselements 30 relativ zum Gehäuse 31 ist ein erstes Anzeigefeld 340 (Fig. 6A) oder ein zweites Anzeigefeld 341 (Fig. 6B) der Anzeigeeinrichtung 34 sichtbar, so dass erkennbar ist, in welcher Stellung sich die Verschlussvorrichtung 1 gerade befindet. Insbesondere kann unmittelbar erkannt werden, ob die Verschlussvorrichtung 1 vollständig geschlossen ist oder nicht.

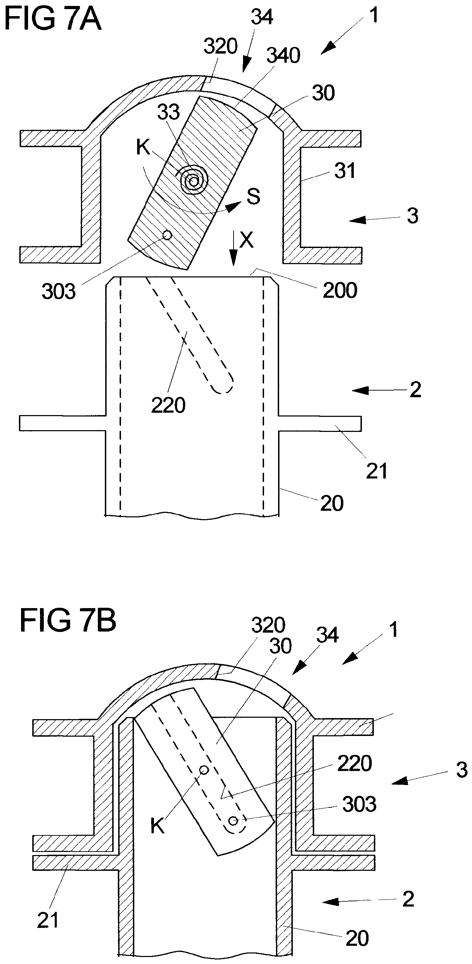

Ein weiteres Ausführungsbeispiel einer Verschlussvorrichtung 1 zeigen Fig. 7A und 7B. Bei der Verschlussvorrichtung 1 ist an einem zweiten Verschlussteil 3 ein Verbindungselement 30 an einem Gehäuse 31 um eine Kippachse K verkippbar gelagert. Die Kippachse K erstreckt sich quer zu einer Ansetzrichtung X, in die das zweite Verschlussteil 3 an ein erstes Verschlussteil 2 zum Schließen der Verschlussvorrichtung 1 angesetzt werden kann.

Das kippbare Verbindungselement 30 weist einen Verbindungsabschnitt 303 in Form eines Zapfens auf. An dem ersten Verschlussteil 2 ist demgegenüber ein Verbindungsabschnitt 220 in Form einer schräg zur Ansetzrichtung X erstreckten Kulisse ausgebildet. Beim Ansetzen der Verschlussteile 2, 3 aneinander läuft der zapfenförmige Verbindungsabschnitt 303 an dem Verbindungselement 30 in den kulissenförmigen Verbindungsabschnitt 220 an dem ersten Verschlussteil 2 ein, so dass beim Ansetzen der Verschlussteile 2, 3 der zapfenförmige Verbindungsabschnitt 303 entlang des kulissenförmigen Verbindungsabschnitts 220 läuft und dadurch das Verbindungselement 30 um seine Kippachse K in eine Verstellrichtung S relativ zum Gehäuse 30 verkippt wird, wie dies im Übergang von Fig. 7A zu Fig. 7B ersichtlich ist.

An einem vom ersten Verschlussteil 2 abgewandten Ende des Verbindungselements 30 ist ein Anzeigefeld 340 einer Anzeigeeinrichtung 34 ausgebildet. Das Anzeigefeld 340 steht in der geöffneten Stellung der Verschlussvorrichtung 1 (Fig. 7A) in Deckung mit einer Aussparung 320 am Gehäuse 31 und ist dadurch von außen sichtbar. Wird das Verbindungselement 30 beim Ansetzen der Verschlussteile 2, 3 aneinander verkippt, so gelangt das Anzeigefeld 340 aus dem Bereich der Aussparung 320 und ist somit von außen nicht mehr sichtbar. Auf diese Weise wird angezeigt, dass die Verschlussvorrichtung 1 in ihre geschlossene Stellung überführt worden ist, in der die Verschlussteile 2, 3 miteinander in Eingriff stehen.

Durch Ziehen an dem zweiten Verschlussteil 3 entgegen der Ansetzrichtung X können die Verschlussteile 2, 3 voneinander gelöst werden. Nach Lösen der Verschlussteile 2, 3 voneinander gelangt das Verbindungselement 30 zurück in seine erste Stellung (Fig. 7A), aufgrund einer Vorspannkraft, die durch ein Federelement 33 auf das Verbindungselement 30 in Richtung der ersten Stellung ausgeübt wird.

Der der Erfindung zugrunde liegende Gedanke ist nicht auf die vorangehend geschilderten Ausführungsbeispiele beschränkt, sondern lässt sich auch in gänzlich anders gearteter Weise verwirklichen.

Die Verschlussvorrichtung kann als magnetische Verschlussvorrichtung mit zusätzlichen Magnetelementen ausgestaltet sein, die das Ansetzen der Verschlussteile aneinander magnetisch unterstützen.

Denkbar und möglich ist aber auch, die Verschlussvorrichtung als rein mechanisch wirkende Verschlussvorrichtung auszugestalten, bei der keine Magnetelemente zum magnetischen Unterstützen des Ansetzens vorhanden sind. In diesem Fall können die Verschlussteile aneinander angesetzt werden und sind in der Schließstellung mechanisch aneinander gehalten, wobei es beim Ansetzen zu einer Verstellung des Verbindungselements und darüber zu einer Änderung der Anzeigestellung der Anzeigeeinrichtung kommt.

Eine Verschlussvorrichtung der hier beschriebenen Art ist nicht nur zur Verbindung einer Fußmatte mit einem Fahrzeugboden einsetzbar, sondern lässt sich in vielfältiger Weise auch anderswo verwenden. Eine Verschlussvorrichtung der hier beschriebenen Art ist insbesondere da sinnvoll einsetzbar, wo sicher und zuverlässig angezeigt werden soll, ob die Verschlussvorrichtung vollständig geschlossen ist oder nicht, also insbesondere zur Befestigung von sicherheitsrelevanten Teilen.

### Bezugszeichenliste

- 1: Verschlussvorrichtung
- 2: Verschlussteil
- 20: Schaft
- 200: Ende
- 21: Kragen
- 22: Verbindungseinrichtung (Gewinde)
- 220: Verbindungsabschnitt (Gewindegänge)
- 221: Formschlusselemente (Zähne)
- 23: Magnet
- 3: Verschlussteil
- 30: Verbindungselement
- 300: Kragen
- 301: Bund
- 302: Öffnung
- 303, 303A, 303B: Verbindungsabschnitt (Gewindegänge)
- 304: Formschlusselemente (Zähne)
- 31: Gehäuse
- 310,311: Gehäuseteil
- 312: Bund
- 313: Bund
- 314: Lageröffnung
- 315: Befestigungsstellen
- 316: Befestigungsstellen
- 317: Anschläge
- 32: Betätigungselement
- 320: Aussparung
- 321: Aufnahmeöffnung
- 322: Aufnahmerille
- 33: Federelement
- 34: Anzeigeeinrichtung
- 340, 341: Feld
- 35: Magnet
- 4,5: Befestigungselement
- D: Drehachse
- F: Belastungsrichtung
- K: Kippachse
- O: Öffnungsrichtung
- S: Verstellrichtung
- X: Ansetzrichtung

## Patentansprüche

1. Verschlussvorrichtung (1) zum Verbinden zweier Teile miteinander, mit einem ersten Verschlussteil (2) und einem in eine Ansetzrichtung (X) an das erste Verschlussteil (2) ansetzbaren, zweiten Verschlussteil (3), das ein Gehäuse (31) und ein entlang einer von der Ansetzrichtung (X) unterschiedlichen Verstellrichtung (S) bewegbar an dem Gehäuse (31) angeordnetes Verbindungselement (30) aufweist, wobei das Verbindungselement (30)
- zum Schließen der Verschlussvorrichtung (1) in die Ansetzrichtung (X) an das erste Verschlussteil (2) ansetzbar ist und beim Ansetzen aus einer ersten Stellung in die Verstellrichtung (S) in eine zweite Stellung relativ zum Gehäuse (31) bewegt wird,
- sich in einer Schließstellung der Verschlussvorrichtung (1) in der zweiten Stellung befindet und derart mit dem ersten Verschlussteil (2) verbunden ist, dass das zweite Verschlussteil (3) an dem ersten Verschlussteil (2) gehalten ist, und
- in Richtung der ersten Stellung gegenüber dem Gehäuse (31) vorgespannt ist,
**gekennzeichnet durch**
eine an dem zweiten Verschlussteil (3) angeordnete Anzeigeeinrichtung (34), die durch eine Bewegung des Verbindungselements (30) relativ zum Gehäuse (31) verstellbar ist, sich in der ersten Stellung des Verbindungselements (30) in einer ersten Anzeigestellung und in der zweiten Stellung des Verbindungselements (30) in einer zweiten Anzeigestellung befindet.

2. Verschlussvorrichtung (1) nach Anspruch 1, **dadurch gekennzeichnet, dass** das Verbindungselement (30) mit einem Betätigungselement (32) verbunden ist derart, dass über das Betätigungselement (32) das Verbindungselement (30) relativ zum Gehäuse (31) verstellbar ist, wobei die Anzeigeeinrichtung (34) durch Verstellen des Betätigungselements (32) verstellbar ist.

3. Verschlussvorrichtung (1) nach Anspruch 1 oder 2, **dadurch gekennzeichnet, dass** die Anzeigeeinrichtung (34) mindestens zwei Anzeigefelder (340, 341) aufweist, von denen in der ersten Stellung des Verbindungselements (30) ein erstes und in der zweiten Stellung des Verbindungselements (30) ein zweites sichtbar ist.

4. Verschlussvorrichtung (1) nach Anspruch 3, **dadurch gekennzeichnet, dass** die mindestens zwei Anzeigefelder (340, 341) an dem Gehäuse (31) angeordnet sind, wobei das Betätigungselement (32) eine Aussparung (320) aufweist, die abhängig von der Stellung des Verbindungselements (30) mit einem der der mindestens zwei Anzeigefelder (340, 341) in Deckung ist und dadurch das jeweilige Anzeigefeld (340, 341) sichtbar macht.

5. Verschlussvorrichtung (1) nach einem der vorangehenden Ansprüche, **dadurch gekennzeichnet, dass** das Verbindungselement (30) in der Schließstellung entgegen der Ansetzrichtung (X) und/oder quer zur Ansetzrichtung (X) an dem ersten Verschlussteil (2) gehalten ist.

6. Verschlussvorrichtung (1) nach einem der vorangehenden Ansprüche, **dadurch gekennzeichnet, dass** das Verbindungselement (30) linear verschiebbar, um eine quer zur Ansetzrichtung (X) gerichtete Kippachse verkippbar oder um eine parallel zur Ansetzrichtung (X) gerichtete Drehachse (D) drehbar an dem Gehäuse (31) gelagert ist.

7. Verschlussvorrichtung (1) nach einem der vorangehenden Ansprüche, **dadurch gekennzeichnet, dass** das erste Verschlussteil (2) mindestens einen ersten Verbindungsabschnitt (220) aufweist, der beim Ansetzen des Verbindungselements (30) an das erste Verschlussteil (2) mit mindestens einem zweiten Verbindungsabschnitt (303, 303A, 303B) des Verbindungselements (30) in Anlage gelangt und dadurch das Verbindungselement (30) in die Verstellrichtung (S) relativ zum Gehäuse (31) bewegt.

8. Verschlussvorrichtung (1) nach Anspruch 7, **dadurch gekennzeichnet, dass** der mindestens eine erste Verbindungsabschnitt (220) und/oder der mindestens eine zweite Verbindungsabschnitt (303) zur Ansetzrichtung (X) geneigt sind.

9. Verschlussvorrichtung (1) nach Anspruch 7 oder 8, **dadurch gekennzeichnet, dass** der mindestens eine erste Verbindungsabschnitt (220) und/oder der mindestens eine zweite Verbindungsabschnitt (303) geradlinig unter einem Winkel schräg zur Ansetzrichtung (X) erstreckt sind.

10. Verschlussvorrichtung (1) nach Anspruch 7 oder 8, **dadurch gekennzeichnet, dass** der mindestens eine erste Verbindungsabschnitt (220) und/oder der mindestens eine zweite Verbindungsabschnitt (303) durch mindestens einen entlang der Verstellrichtung (S) erstreckten Gewindegang ausgebildet sind.

11. Verschlussvorrichtung (1) nach einem der Ansprüche 7 bis 10, **dadurch gekennzeichnet, dass** die Anlage zwischen dem mindestens einen ersten Verbindungsabschnitt (220) und dem mindestens einen zweiten Verbindungsabschnitt (303) in der Schließstellung nicht selbsthemmend ist derart, dass bei einer Belastung des Verbindungselements (30) entgegen der Ansetzrichtung (X) sich das Verbindungselement (30) entgegen der Verstellrichtung (S) relativ zum Gehäuse (31) bewegt und die Verschlussteile (2, 3) dadurch voneinander lösbar sind.

12. Verschlussvorrichtung (1) nach einem der Ansprüche 7 bis 10, **dadurch gekennzeichnet, dass** an dem mindestens einen ersten Verbindungsabschnitt (220) mindestens ein erster Formschlussabschnitt (221) und an dem mindestens einen zweiten Verbindungsabschnitt (303) mindestens ein zweiter Formschlussabschnitt (304) angeordnet sind, wobei der mindestens eine erste Formschlussabschnitt (221) und der mindestens eine zweite Formschlussabschnitt bei einer Belastung des Verbindungselements (30) entgegen der Ansetzrichtung (X) formschlüssig miteinander in Eingriff gelangen und dadurch ein Bewegen des Verbindungselements (30) entgegen der Verstellrichtung (S) sperren.

13. Verschlussvorrichtung (1) nach einem der vorangehenden Ansprüche, **dadurch gekennzeichnet, dass** das Verbindungselement (30) durch ein Federelement (33) gegenüber dem Gehäuse (31) vorgespannt ist.

14. Verschlussvorrichtung (1) nach einem der vorangehenden Ansprüche, **dadurch gekennzeichnet, dass** an dem ersten Verschlussteil (2) eine erste Magneteinrichtung (23) und an dem zweiten Verschlussteil (3) eine zweite Magneteinrichtung (35) angeordnet sind, wobei die erste Magneteinrichtung (23) und die zweite Magneteinrichtung (35) bei einem Ansetzen der Verschlussteile (2, 3) aneinander sich magnetisch derart anziehend gegenüberstehen, dass das Ansetzen magnetisch unterstützt wird.

15. Verschlussvorrichtung (1) nach einem der vorangehenden Ansprüche, **dadurch gekennzeichnet, dass** beim Ansetzen der Verschlussteile (2, 3) aneinander zum Schließen der Verschlussvorrichtung (1) das Verbindungselement (30) magnetisch in die Verstellrichtung (S) bewegt wird.

## Claims

1. A closure device (1) for connecting two parts with one another, comprising a first closure part (2) and a second closure part (3) which is attachable in an attachment direction (X) to the first closure (2) part and which has a housing (31) and a connection element (30) arranged movably on the housing (31) in an adjustment direction (S) which differs from the attachment direction (X), wherein the connection element (30)
- for closing the closure device (1) is attachable to the first closure part (2) in the attachment direction (X) and during attachment is moved in the adjustment direction (S) relative to the housing (31) from a first position into a second position,
- in a closed position of the closure device (1) is located in the second position and is connected to the first closure part (2) such that the second closure part (3) is held on the first closure part (2), and
- is pretensioned in the direction of the first position relative to the housing (31),
**characterized by**
a display device (34) which is arranged on the second closure part (3) and which is adjustable by a movement of the connection element (30) relative to the housing (31) and which is located in a first display position in the first position of the connection element (30) and which is located in a second display position in the second position of the connection element (30).

2. The closure device (1) as claimed in claim 1,
**characterized in that** the connection element (30) is connected to an actuating element (32) such that the connection element (30) is adjustable via the actuating element (32) relative to the housing (31), wherein the display device (34) is able to be adjusted by adjusting the actuating element (32).

3. The closure device (1) as claimed in claim 1 or 2,
**characterized in that** the display device (34) has at least two display fields (340, 341), a first display field being visible in the first position of the connection element (30) and a second display field being visible in the second position of the connection element (30).

4. The closure device (1) as claimed in claim 3,
**characterized in that** the at least two display fields (340, 341) are arranged on the housing (31), wherein the actuating element (32) has a recess (320) which is congruent with one of the at least two display fields (340, 341) depending on the position of the connection element (30) and, as a result, makes the respective display field (340, 341) visible.

5. The closure device (1) as claimed in one of the preceding claims, **characterized in that** the connection element (30) is held in the closed position counter to the attachment direction (X) and/or transversely to the attachment direction (X) on the first closure part (2).

6. The closure device (1) as claimed in one of the preceding claims, **characterized in that** the connection element (30) is mounted on the housing (31) in a linear displaceable manner, in a tiltable manner about a tilting axis oriented transversely to the attachment direction (X) or in a rotatable manner about a rotational axis (D) oriented parallel to the attachment direction (X).

7. The closure device (1) as claimed in one of the preceding claims, **characterized in that** the first closure part (2) has at least one first connection portion (220) which, when the connection element (30) is attached, comes to bear against the first closure part (2) with at least one second connection portion (303, 303A, 303B) of the connection element (30) and as a result moves the connection element (30) relative to the housing (31) in the adjustment direction (S).

8. The closure device (1) as claimed in claim 7,
**characterized in that** the at least one first connection portion (220) and/or the at least one second connection portion (303) are inclined relative to the attachment direction (X).

9. The closure device (1) as claimed in claim 7 or 8,
**characterized in that** the at least one first connection portion (220) and/or the at least one second connection portion (303) are extended in a linear manner at an angle obliquely to the attachment direction (X).

10. The closure device (1) as claimed in claim 7 or 8,
**characterized in that** the at least one first connection portion (220) and/or the at least one second connection portion (303) are configured by at least one thread pitch extended in the adjustment direction (S).

11. The closure device (1) as claimed in one of claims 7 to 10, **characterized in that** the bearing between the at least one first connection portion (220) and the at least one second connection portion (303) in the closed position is not self-locking, such that when the connection element (30) is under load counter to the attachment direction (X) the connection element (30) moves relative to the housing (31) counter to the adjustment direction (S) and the closure parts (2, 3) are releasable from one another, as a result.

12. The closure device (1) as claimed in one of claims 7 to 10, **characterized in that** at least one first positive connection portion (221) is arranged on the at least one first connection portion (220) and at least one second positive connection portion is arranged (304) on the at least one second connection portion (303), wherein the at least one first positive connection portion (221) and the at least one second positive connection portion come into positive engagement with one another when the connection element (30) is under load, counter to the attachment direction (X), and block a movement of the connection element (30) counter to the adjustment direction (S), as a result.

13. The closure device (1) as claimed in one of the preceding claims, **characterized in that** the connection element (30) is pretensioned by a spring element (33) relative to the housing (31).

14. The closure device (1) as claimed in one of the preceding claims, **characterized in that** a first magnetic device (23) is arranged on the first closure part (2) and a second magnetic device (35) is arranged on the second closure part (3), wherein the first magnetic device (23) and the second magnetic device (35) when the closure parts (2, 3) are attached to one another oppose one another in a magnetically attractive manner such that the attachment is magnetically assisted.

15. The closure device (1) as claimed in one of the preceding claims, **characterized in that** when the closure parts (2, 3) are attached to one another for closing the closure device (1), the connection element (30) is magnetically moved in the adjustment direction (S).

## Revendications

1. Dispositif de fermeture (1) pour le raccordement de deux parties entre elles, avec une première partie de fermeture (2) et une seconde partie de fermeture (3) pouvant être placée dans un sens de placement (X) sur la première partie de fermeture (2), qui présente un boîtier (31) et un élément de raccordement (30) agencé de manière mobile le long d'un sens de réglage (S) différent du sens de placement (X) sur le boîtier (31), dans lequel l'élément de raccordement (30)
- peut être placé pour la fermeture du dispositif de fermeture (1) dans le sens de placement (X) sur la première partie de fermeture (2) et lors du placement depuis une première position dans le sens de réglage (S) est déplacé dans une seconde position par rapport au boîtier (31),
- se trouve dans une position de fermeture du dispositif de fermeture (1) dans la seconde position et est raccordé à la première partie de fermeture (2) de telle manière que la seconde partie de fermeture (3) soit maintenue sur la première partie de fermeture (2) et
- est précontraint en direction de la première position par rapport au boîtier (31),
**caractérisé par**
un dispositif d'affichage (34) agencé sur la seconde partie de fermeture (3) qui peut être réglé par un mouvement de l'élément de raccordement (30) par rapport au boîtier (31), se trouve dans la première position de l'élément de raccordement (30) dans une première position d'affichage et dans la seconde position de l'élément de raccordement (30) dans une seconde position d'affichage.

2. Dispositif de fermeture (1) selon la revendication 1, **caractérisé en ce que** l'élément de raccordement (30) est raccordé à un élément d'actionnement (32) de telle manière que l'élément de raccordement (30) puisse être réglé par le biais de l'élément d'actionnement (32) par rapport au boîtier (31), dans lequel le dispositif d'affichage (34) est réglable par réglage de l'élément d'actionnement (32).

3. Dispositif de fermeture (1) selon la revendication 1 ou 2, **caractérisé en ce que** le dispositif d'affichage (34) présente au moins deux champs d'affichage (340, 341) dont un premier est visible dans la première position de l'élément de raccordement (30) et un second est visible dans la seconde position de l'élément de raccordement (30).

4. Dispositif de fermeture (1) selon la revendication 3, **caractérisé en ce que** les au moins deux champs d'affichage (340, 341) sont agencés sur le boîtier (31), dans lequel l'élément d'actionnement (32) présente un évidement (320) qui est en recouvrement en fonction de la position de l'élément de raccordement (30) avec un des au moins deux champs d'affichage (340, 341) et rend visible ainsi le champ d'affichage respectif (340, 341).

5. Dispositif de fermeture (1) selon l'une quelconque des revendications précédentes, **caractérisé en ce que** l'élément de raccordement (30) est maintenu dans la position de fermeture dans le sens inverse au sens de placement (X) et/ou transversalement au sens de placement (X) sur la première partie de fermeture (2).

6. Dispositif de fermeture (1) selon l'une quelconque des revendications précédentes, **caractérisé en ce que** l'élément de raccordement (30) est logé de manière mobile linéairement, de manière basculable autour d'un axe de basculement dirigé transversalement au sens de placement (X) ou de manière rotative autour d'un axe de rotation (D) dirigé parallèlement au sens de placement (X) sur le boîtier (31).

7. Dispositif de fermeture (1) selon l'une quelconque des revendications précédentes, **caractérisé en ce que** la première partie de fermeture (2) présente au moins une première section de raccordement (220) qui parvient en appui lors du placement de l'élément de raccordement (30) sur la première partie de fermeture (2) avec au moins une seconde section de raccordement (303, 303A, 303B) de l'élément de raccordement (30) et déplace ainsi l'élément de raccordement (30) dans le sens de réglage (S) par rapport au boîtier (31).

8. Dispositif de fermeture (1) selon la revendication 7, **caractérisé en ce que** l'au moins une première section de raccordement (220) et/ou l'au moins une seconde section de raccordement (303) sont inclinées par rapport au sens de placement (X).

9. Dispositif de fermeture (1) selon la revendication 7 ou 8, **caractérisé en ce que** l'au moins une première section de raccordement (220) et/ou l'au moins une seconde section de raccordement (303) sont étirées en ligne droite selon un angle en biais par rapport au sens de placement (X).

10. Dispositif de fermeture (1) selon la revendication 7 ou 8, **caractérisé en ce que** l'au moins une première section de raccordement (220) et/ou l'au moins une seconde section de raccordement (303) sont réalisées par au moins un filet étiré le long du sens de réglage (S).

11. Dispositif de fermeture (1) selon l'une quelconque des revendications 7 à 10, **caractérisé en ce que** l'appui entre l'au moins une première section de raccordement (220) et l'au moins une seconde section de raccordement (303) dans la position de fermeture n'est pas autobloquant de telle manière que lors d'une sollicitation de l'élément de raccordement (30) dans le sens inverse au sens de placement (X) l'élément de raccordement (30) se déplace dans le sens inverse au sens de réglage (S) par rapport au boîtier (31) et les parties de fermeture (2, 3) soient ainsi détachables l'une de l'autre.

12. Dispositif de fermeture (1) selon l'une quelconque des revendications 7 à 10, **caractérisé en ce que** sur l'au moins une première section de raccordement (220) au moins une première section de complémentarité de formes (221) et sur l'au moins une seconde section de raccordement (303) au moins une seconde section de complémentarité de formes (304) sont agencées, dans lequel l'au moins une première section de complémentarité de formes (221) et l'au moins une seconde section de complémentarité de formes parviennent en prise par complémentarité de formes entre elles lors d'une sollicitation de l'élément de raccordement (30) dans le sens inverse au sens de placement (X) et bloquent ainsi un déplacement de l'élément de raccordement (30) dans le sens inverse au sens de réglage (S).

13. Dispositif de fermeture (1) selon l'une quelconque des revendications précédentes, **caractérisé en ce que** l'élément de raccordement (30) est précontraint par un élément de ressort (33) par rapport au boîtier (31).

14. Dispositif de fermeture (1) selon l'une quelconque des revendications précédentes, **caractérisé en ce que** sur la première partie de fermeture (2) un premier dispositif magnétique (23) et sur la seconde partie de fermeture (3) un second dispositif magnétique (35) sont agencés, dans lequel le premier dispositif magnétique (23) et le second dispositif magnétique (35) se font face par attraction magnétique lors d'un placement des parties de fermeture (2, 3) l'une sur l'autre de telle manière que le placement soit soutenu magnétiquement.

15. Dispositif de fermeture (1) selon l'une quelconque des revendications précédentes, **caractérisé en ce que** lors du placement des parties de fermeture (2, 3) l'une sur l'autre pour la fermeture du dispositif de fermeture (1), l'élément de raccordement (30) est déplacé magnétiquement dans le sens de réglage (S).
